# FASCICULE DE BREVET EUROPEEN

(11) **EP 1 723 198 B1**
(45) Date de publication et mention de la délivrance du brevet: **19.03.2008**
(21) Numéro de dépôt: 04816397.6
(22) Date de dépôt: 16.12.2004
(51) Int. Cl.: C08K 9/10

(54) **PARTICULES COMPOSITES DE LATEX RECOUVERTES PAR UNE PHASE MINERALE COMPRENANT AU MOINS UN SILLICATE D’ALCALINO-TERREUX HYDRATE INSOLUBLE DANS L’EAU, LEURS PREPARATIONS, ET LEURS UTILISATIONS**
LATEXVERBUNDTEILCHEN, DIE DURCH EINE MINDESTENS EIN WASSERUNLÖSLICHES ERDALKALIMETALLSILICATHYDRAT UMFASSENDE MINERALPHASE BEDECKT SIND, HERSTELLUNGEN UND VERWENDUNGEN DAVON
LATEX COMPOSITE PARTICLES COVERED BY A MINERAL PHASE COMPRISING AT LEAST ONE HYDRATED ALKALI EARTH SILICATE WHICH IS INSOLUBLE IN WATER, PREPARATIONS AND USES THEREOF

(30) Priorité: 19.12.2003 FR 0315062
(43) Date de publication de la demande: 22.11.2006
(73) Titulaire: Hexion Specialty Chemicals Research Belgium S.A., 1348 Ottignies Louvain-la-Neuve (BE); CENTRE NATIONAL DE LA RECHERCHE SCIENTIFIQUE (CNRS), 75794 Paris Cedex 16 (FR)
(72) Inventeur: TAQUET, Pascal, F-60340 Villiers sous Saint Leu (FR); CASTAING, Jean-Christophe, F-75019 Paris (FR); NONAT, André, F-21380 Epagny (FR); NICOLEAU, Luc, F-58240 Luthenay Exeloup (FR)
(74) Mandataire: van der Straaten, Jan Anthony
(86) Numéro de dépôt international: PCT/FR2004/003257
(87) Numéro de publication internationale: WO 2005/061609

(56) Documents cités:
- EP-A- 0 573 036
- FR-A- 2 669 918

## Description

La présente invention concerne des particules composites de latex encapsulées constituées d'un coeur comprenant au moins un polymère organique (latex), au moins en partie recouvert par une ou plusieurs couches de phase minérale comprenant au moins un silicate d'alcalino-terreux hydraté insoluble dans l'eau tel qu'un silicate de calcium hydraté insoluble dans l'eau ou un silicate de magnésium hydraté insoluble dans l'eau ou une de leurs phases mixtes.

Elle a de même pour objet l'utilisation des particules composites de latex encapsulées dans une composition de liant minéral.

Enfin, l'invention a pour objet les compositions de liants comprenant les particules composites de latex encapsulées et leurs utilisations dans l'industrie du bâtiment, du génie civil ou du pétrole.

Les liants minéraux hydrauliques sont généralement à base de ciment. Ils peuvent être sous forme de coulis, mortiers ou bétons. Ils sont utilisés par exemple dans les applications suivantes : les ciment-colles carrelage, les enduits de lissage et de ragréage, les colles et enduits pour complexes isolants, les mortiers de réparation, les revêtements d'étanchéité et les coulis de cimentation des puits de pétrole.

Néanmoins, quelques problèmes communs à ces applications ont été constatés, à savoir :
- l'adhérence sur un support souvent peu rugueux,
- les retraits différentiels du liant hydraulique par rapport au support et parfois à l'élément à coller,
- les déformations volumiques dues aux variations de l'hygrométrie.

La mise au point et l'emploi d'additifs hydrophiles et en particulier de polymères filmogènes (latex) comprenant des groupements hydrophiles dans ces mortiers ont apporté, dès 1960, des solutions remarquables à ces problèmes, au point qu'ils sont devenus d'un usage courant et peu à peu indispensables. Ils ont, en outre, apporté d'autres propriétés après durcissement des compositions de liants minéraux hydrauliques telles que l'adhésion sur divers substrats, l'étanchéité, la souplesse, et les propriétés mécaniques.

Or, il se trouve que la présence de ces latex hydrophiles présente des inconvénients dans l'application visée.

On observe d'une manière générale une mauvaise compatibilité du latex avec le ciment.

Cette mauvaise compatibilité du latex avec le ciment peut se traduire dans certains cas par l'apparition d'un seuil d'écoulement, c'est à dire que le ciment adjuventé en latex perd sa fluidité, devient visqueux et difficilement manipulable lors du gâchage.

Les latex peuvent également modifier le processus de précipitation des hydrates du ciments en influant sur le site de nucléation des hydrates, ou en changeant leur morphologie. Ces modifications sont moins visibles lors de la mise en oeuvre des compositions de liants minéraux tels que les mortiers mais ils influent sur leurs propriétés mécaniques finales notamment les propriétés d'adhésion ou leur durabilité.

Cette mauvaise compatibilité ciment peut également se traduire par une augmentation importante du temps de prise de ce liant minéral hydraulique, et plus particulièrement lorsqu'on utilise un liant minéral hydraulique adjuventé en latex comprenant des fonctions hydrophiles. Ce phénomène est encore plus marqué lorsque le liant hydraulique est à base de ciment Portland et en particulier avec le ciment Portland 52.5. CPA cem1.

Cet inconvénient peut s'avérer complètement rédhibitoire dans les utilisations dans le domaine de la construction où les temps d'attente avant de pouvoir effectuer l'opération suivante sont toujours réduits au maximum.

Enfin la réalisation d'une composition de latex sous forme de poudre redispersable, qui puisse être stockée sous cette forme ou mélangée à la composition de liant minéral sous forme de poudre pour obtenir une composition de liant prête à l'emploi, nécessite l'utilisation d'une quantité importante d'additifs de redispersion, jusqu'à environ 15% en poids d'additif par rapport au poids du mélange. Or ces additifs présentent les mêmes inconvénients cités ci-dessus de compatibilité avec le ciment ou de retard de prise, et ils peuvent en outre favoriser le mottage de la poudre lors de son stockage dans des conditions d'humidité relativement élevée.

La présente invention a été mise au point afin de résoudre les problèmes mentionnés plus haut.

Un des buts de la présente invention est de fournir un procédé pour obtenir une composition de liant minéral (hydraulique ou aérien) adjuventée en latex qui ne présente pas les inconvénients mentionnés ci-dessus.

Un des buts de l'invention est également de préparer un latex qui présente une bonne compatibilité dans un environnement cimentaire, ou pour conférer à la composition de liant minéral de bonnes propriétés de résistance à l'eau, de bonnes propriétés mécaniques finales, des propriétés d'adhésion spécifiques ou une bonne durabilité.

Un autre but de la présente invention est de fournir un procédé pour accélérer la prise d'une composition de liant minéral adjuventée en latex comprenant des fonctions hydrophiles.

Un autre but de l'invention est également de préparer à partir de ce latex une poudre de latex redispersable qui présente de très bonnes propriétés de redispersion en diminuant la quantité d'additif de redispersion.

Ces buts et d'autres sont atteints par la présente invention qui a tout d'abord pour objet des particules composites de latex encapsulées constituées d'un coeur comprenant au moins un polymère organique (latex), au moins en partie recouvert par une ou plusieurs couches de phase minérale comprenant au moins un silicate d'alcalino-terreux hydraté insoluble dans l'eau tel qu'un silicate de calcium hydraté insoluble dans l'eau ou un silicate de magnésium hydraté insoluble dans l'eau ou une de leurs phases mixtes.

La présente invention a également pour objet un procédé de préparation des particules composites de latex encapsulées précitées, comprenant les étapes suivantes :
1) on met en contact, en suspension, au moins un polymère organique insoluble dans l'eau (latex) avec au moins un hydroxyde d'alcalino-terreux ou au moins un halogénure d'alcalino-terreux tel qu'un chlorure, bromure, fluorure ou iodure d'alcalino-terreux ;
2) on ajoute à la suspension obtenue à l'étape 1 au moins un silicate d'alcalin soluble dans l'eau ou au moins un silicate d'alcalino-terreux soluble dans l'eau ;
l'étape 2 étant réalisée après l'étape 1 ou éventuellement en même temps que l'étape 1 dans le cas où on utilise à l'étape 1 un ou plusieurs hydroxydes d'alcalino-terreux.

Les particules de latex encapsulées ainsi obtenues en dispersion aqueuses peuvent être utilisées telles quelles, ou bien il est possible de les filtrer et/ou de les sécher.

La présente invention a également pour objet l'utilisation des particules composites de latex encapsulées dans une composition de liant minéral.

La présente invention a également pour objet une composition de liant minéral comprenant des particules composites de latex encapsulées.

La présente invention a également pour objet l'utilisation d'une composition de liant minéral comprenant des particules composites de latex encapsulées dans l'industrie du bâtiment, du génie civil ou du pétrole.

D'autres caractéristiques, détails et avantages de l'invention apparaîtront plus clairement à la lecture de la description et des exemples qui vont suivre.

L'invention concerne tout d'abord des particules composites de latex encapsulées constituées d'un coeur comprenant au moins un polymère organique (latex), au moins en partie recouvert par une ou plusieurs couches de phase minérale comprenant au moins un silicate d'alcalino-terreux hydraté insoluble dans l'eau tel qu'un silicate de calcium hydraté insoluble dans l'eau ou un silicate de magnésium hydraté insoluble dans l'eau ou une de leurs phases mixtes.

Plus précisément, le revêtement (ou, indifféremment, l'écorce, la couche) à base de phase minérale comprenant d'au moins un silicate d'alcalino-terreux hydraté insoluble dans l'eau tel qu'un silicate de calcium hydraté insoluble dans l'eau ou d'un silicate de magnésium hydraté insoluble dans l'eau ou leurs phases mixtes peut recouvrir en partie seulement ou en totalité, chaque coeur de polymère organique. Il est possible aussi que ledit revêtement soit déposé sur des agrégats de particules de latex.

Selon une variante interessante de l'invention, le coeur à base de polymère organique est recouvert d'une couche intermédiaire à base essentiellement d'un oxyde ou hydroxyde d'alcalino-terreux tel que Ca(OH)₂.

Par oxyde et /ou d'hydroxyde d'un alcalinoterreux on entend des oxydes ou des hydroxydes des éléments de la deuxième colonne de la classification périodique. On peut citer à titre d'exemple pour les oxydes CaO ou MgO. On peut citer à titre d'exemple pour les hydroxydes Ca(OH)₂ ou Mg(OH)₂.

Par silicates d'alcalino-terreux hydratés insolubles dans l'eau, on entend au sens de l'invention des composés de formule (I) suivante :

CaO, aSiO₂ bMgO, cH₂O, dX (I)

dans laquelle X représente un alcalin choisi parmi Li, Na, K, Rb, Cs ou leur mélange, avec
0,5 ≤ a < 10
0 ≤ b < 1
1 ≤ c/a ≤ 5
0 ≤ d/a ≤ 1

Les silicates d'alcalino-terreux hydratés insolubles dans l'eau sont préparés in situ dans le procédé de préparation des particules de latex encapsulées.

La nature des polymères organiques entrant dans la composition des particules composites est du type de celle de particules de latex, c'est-à-dire de particules de (co)polymères issues de procédés classiques de (co)polymérisation en émulsion de monomères organiques copolymérisables.

D'une manière générale, les polymères filmogènes insolubles dans l'eau sous forme de dispersion aqueuse (latex) ou sous forme de poudres redispersables ne sont pas stables à la polymérisation ou au stockage si elles ne présentent pas de groupements hydrophiles généralement anioniques ou neutres à la surface des particules.

C'est la raison pour laquelle on introduit ces groupements pendant la polymérisation en émulsion en ajoutant des monomères fonctionnalisés ou des tensioactifs.

Par groupements hydrophiles anioniques on entend notamment les groupements carboxylés, sulfonatés, phosphatés, phosphonatés, sulfatés ou boronatés.

De préférence on utilise des groupements carboxylés.

Lorsque l'on veut introduire des groupements carboxylés, on peut utiliser comme monomère un monoacide à fonctions vinyliques tel que l'acide acrylique, l'acide méthacrylique ou l'acide crotonique, ou bien un diacide à insaturation vinylique tel que l'acide fumarique, l'acide itaconique, l'acide maléique l'acide citraconique, le beta carboxy ethyl acrylate, ou l'acide acrylamidoglycolique.

La synthèse de polymères filmogènes comprenant des groupements carboxylés est décrite notamment dans l'extrait de l'Encyclopedia of Polymer Science and Engineering, volume 8, pages 662-663, John Wiley & Sons, Inc, 1987, les documents US 4567099, US 5750618 et US 5759347.

On peut également utiliser des tensioactifs dont l'extrémité hydrophile est composée d'au moins un groupe sulfate, carboxylate, sulfonate, phosphate, phosphonate ou boronate.

Par groupements hydrophiles neutres on tentend notamment des groupements d'alcool polyvinyliques, de polyacrylamide, de polyvinylpyrrolidone, de polyethylèneglycol et de certains polymères dérivés de la cellulose ou de l'amidon.

Les polymères filmogènes insolubles dans l'eau sont de préférence à base des homopolymères et copolymères acétate de vinyle, styrène/butadiène, styrène/acrylate, acrylate et styrène/butadiène/acrylate.

La teneur en polymère dans l'émulsion se situe généralement entre 30 et 70% en poids, plus spécifiquement entre 35 et 65% en poids.

Ces polymères organiques présentent plus particulièrement une température de transition vitreuse comprise entre -200°C et 200°C. Selon un mode de réalisation particulièrement avantageux et préféré de l'invention, la température de transition vitreuse est comprise entre -20°C et +50°C, et de manière encore plus préférentielle entre -20°C et +20°C.

Parmi les (co)polymères entrant dans la composition des particules composites, on peut citer notamment, et sans intention de se limiter, ceux issus de la polymérisation des monomères suivants :
- les esters vinyliques et plus particulièrement l'acétate de vinyle ;
- les acrylates et méthacrylates d'alkyle dont le groupe alkyle contient de 1 à 10 atomes de carbone par exemple les acrylates et méthacrylates de méthyle, éthyle, n-butyle, 2-éthylhexyle ;
- les monomères vinylaromatiques en particulier le styrène.

Ces monomères peuvent être copolymérisés entre eux ou avec d'autres monomères à insaturation éthylénique, pour former des homopolymères, des copolymères ou des terpolymères.

A titre d'exemples non limitatifs de monomères copolymérisables avec l'acétate de vinyle et/ou les esters acryliques et/ou le styrène, on peut citer l'éthylène et les oléfines comme l'isobutène ou les alpha-oléfines ayant de 6 à 20 atomes de carbone et de préférence de 8 à 14 atomes de carbone; les esters vinyliques d'acides monocarboxyliques saturés, ramifiés ou non, ayant de 1 à 16 atomes de carbone, comme le propionate de vinyle, le "Versatate" de vinyle (marque déposée pour les esters d'acides ramifiés en C₉-C₁₁) et en particulier pour le néodécanoate de vinyle appelé Veova 10, le pivalate de vinyle, le 2 ethylhexylhexanoate de vinyle, ou le laurate de vinyle ; les esters d'acides insaturés mono- ou di-carboxyliques possédant 3 à 6 atomes de carbone avec les alcanols possédant 1 à 10 atomes de carbone, comme les maléates, fumarates de méthyle, d'éthyle, de butyle, d'éthylhexyle ; les monomères vinylaromatiques tels que les méthylstyrènes, les vinyltoluènes ; les halogénures de vinyle tels que le chlorure de vinyle, le chlorure de vinylidène, les diolefines particulièrement le butadiène ; les esters (méth)allyliques de l'acide (meth)acrylique, les esters (méth)allyliques des mono et diesters des acides maléique, fumarique, crotonique et itaconique, ainsi que les dérivés alkèniques des amides des acides acryliques et méthacryliques, tels que le N-méthallylmaléimide.

On peut notamment choisir au moins 2 monomères copolymérisables de natures différentes pour obtenir un terpolymère.

On peut citer à titre d'exemple un terpolymère de type acétate de vinyle/versatate de vinyle/dibutylmaléate de vinyle.

On peut également ajouter au(x) monomère(s) copolymérisable(s) avec l'acétate de vinyle et/ou les esters acryliques et/ou le styrène au moins un autre monomère choisi dans la liste suivante :
- l'acrylamide, les acides ou diacides carboxyliques à insaturation éthylénique, de préférence l'acide acrylique ou l'acide méthacrylique, les acides sulfoniques à insaturation éthylénique et des sels de ceux-ci, de préférence l'acide vinylsulfonique ou l'acide 2-acrylamido-2-méthylpropanesulfonique (AMPS), ou le méthallylsulfonate de sodium ;
- des monomères réticulants porteurs d'au moins deux insaturations éthyléniques tels que le diallylphtalate ou le diméthylméthacrylated'éthylène glycol ;
- des monomères avec des fonctions silanes tels que le vinyltrimethoxy silane ou le vinyltriethoxy silane.

Ces monomères sont ajoutés en quantité comprise entre 0,05 et 10,0 % en poids, par rapport au poids total des monomères. Ces monomères sont ajoutés au cours de la polymérisation.

Comme cela a été indiqué auparavant, les particules composites selon l'invention présentent un coeur à base d'au moins un polymère organique (latex), au moins en partie recouvert par une ou plusieurs couches de phase minérale comprenant des silicates d'alcalino-terreux hydratés insolubles dans l'eau tels que des silicates de calcium hydratés insolubles dans l'eau ou des silicates de magnésium hydratés insolubles dans l'eau ou leurs phases mixtes.

Selon une première variante de la présente invention, les particules composites selon l'invention comprennent une seule couche de phase minérale comprenant des silicates d'alcalino-terreux hydratés insolubles dans l'eau tels que des silicates de calcium hydratés insolubles dans l'eau ou des silicates de magnésium hydratés insolubles dans l'eau ou leurs phases mixtes.

Selon une seconde variante de la présente invention, lesdites particules composites comprennent au moins deux couches de phase minérale comprenant des silicates d'alcalino-terreux hydratés insolubles dans l'eau de nature et/ou stoechiométries différentes. On peut citer notamment le cas particulier où la phase minérale de la première couche est un oxyde d'alcalino-terreux tel que CaO ou MgO.

Il est à noter que les particules selon l'invention sont plus particulièrement sphériques.

Les particules composites selon l'invention ont généralement un diamètre moyen d'au plus 15 µm. De préférence le diamètre moyen est compris entre 0,15 et 5 µm.

La détermination du diamètre moyen de ces particules, et de toutes les autres particules définies dans le texte, est réalisée par MET.

La taille finale est comprise entre la taille du latex initial et jusqu'à 40 fois la taille du latex initial. En effet, comme indiqué précédemment, il peut y avoir des aggrégats de particules de latex recouvertes par le dépôt minéral. Le diamètre moyen des aggrégats peut être 40 fois supérieur au diamètre moyen du latex initial.

Il est à noter que l'on en sortirait pas du cadre de la présente invention en préparant des particules composites bimodales, par exemple.

Le diamètre du coeur de polymère organique est habituellement compris entre 0,04 et 5 µm.

L'épaisseur totale du revêtement, c'est-à-dire comprenant une ou plusieurs couches à base de phase minérale comprenant des silicates d'alcalino-terreux hydratés insolubles dans l'eau de nature et/ou stoechiométries différentes est généralement d'au plus 50 nm. Cette taille peut être très petite. Elle peut-être comprise entre 0,1 et 5 nm.

Les dimensions données ci-dessus le sont à titre indicatif.

En pratique on peut indiquer que le dépôt correspond à une masse de phase minérale comprise entre 0,1% et 75% en poids de phase minérale par rapport au poids du latex sec et plus particulièrement entre 1% et 25% en poids de phase minérale par rapport au poids du latex sec.

Il est ainsi possible de déterminer la quantité de phase minérale déposée sur le latex en effectuant une calcination à au moins 900°C et en pesant les résidus.

Il est important que le dépôt de phase minérale soit déposée de façon uniforme à la surface des latex et qu'il n'y ait pas de particules dites « hors grain », c'est à dire des phases minérales existantes à coté du latex.

Il est possible de contrôler cela par un cliché de MET.

Des procédés de préparation des particules composites de latex selon l'invention vont maintenant être décrits.

Il est à noter qu'on peut réaliser le dépôt minéral à l'issue de la synthèse du latex dans le même réacteur.

Tout d'abord, vont être décrits des procédés de préparation de suspensions de particules composites selon l'invention comprenant un coeur à base d'au moins un polymère organique (latex), au moins en partie recouvert par une ou plusieurs couches de phase minérale comprenant des silicates d'alcalino-terreux hydratés insolubles dans l'eau tels que des silicates de calcium hydratés insolubles dans l'eau ou des silicates de magnésium hydratés insolubles dans l'eau ou leurs phases mixtes.

Le procédé de préparation de suspensions de particules composites de latex comprend les étapes suivantes :
3) on met en contact, en suspension, au moins un polymère organique insoluble dans l'eau (latex) avec au moins un hydroxyde d'alcalino-terreux ou au moins un halogénure d'alcalino-terreux tel qu'un chlorure, bromure, fluorure ou iodure d'alcalino-terreux ;
4) on ajoute à la suspension obtenue à l'étape 1 au moins un silicate d'alcalin soluble dans l'eau ou au moins un silicate d'alcalino-terreux soluble dans l'eau ;
l'étape 2 étant réalisée après l'étape 1 ou éventuellement en même temps que l'étape 1 dans le cas où on utilise à l'étape 1 un ou plusieurs hydroxydes d'alcalino-terreux.

Les particules de latex encapsulées ainsi obtenues en dispersion aqueuses peuvent être utilisées telles quelles, ou bien il est possible de les filtrer et/ou de les sécher.

Par silicate alcalin soluble, on entend par exemple un silicate de sodium ou un silicate de potassium.

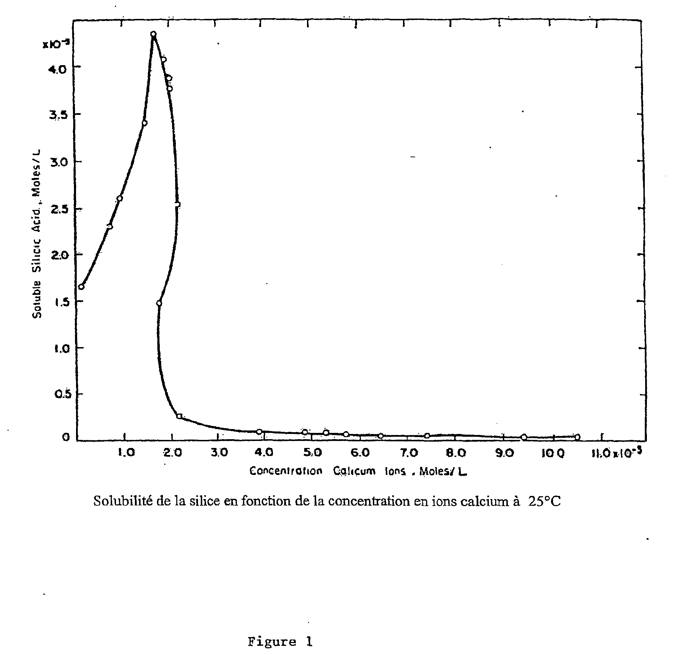

Par silicate d'alcalino-terreux soluble dans l'eau, on entend un silicate d'alcalinoterreux de formule (I) telle que définie précédemment dans laquelle le taux de calcium et de silice sont choisis de telle façon que le silicate d'alcalino-terreux obtenu soit soluble dans l'eau. Ces conditions sont connues de l'homme du métier qui peut se référer à la figure 1 de la présente demande de brevet qui indique la courbe de solubilité du mélange silice/chaux. Lorsque on se situe au-dessous de cette courbe, on obtient une composition soluble dans l'eau à 25°C. Cette courbe est extraite d'un article de S.A. Greenberg and T.N.Chang, Journal of Physical Chemistry, volume 69, numéro 1, janvier 1965, pages 182-188.

On peut indiquer à titre d'exemple qu'il est possible de réaliser une solution de silicate d'alcalino-terreux soulble dans l'eau lorsqu'on utilise 2 mmol/l de SiO₂ pour 1,5mmol/l de Ca(OH)₂.

La nature des particules de latex est du type de celle des polymères des particules composites définies précédemment.

Comme cela a été indiqué auparavant, il est possible de mélanger deux types de latex présentant des tailles de particules différentes, de manière à obtenir des particules composites dont la répartition de population est bimodale.

Dans l'étape 1, le latex est laissé en contact avec au moins un hydroxyde d'alcalino-terreux ou au moins un halogénure d'alcalino-terreux. La température de mûrissement peut être contrôlée. La température peut être comprise entre 20 et 100°C plus préférentiellement entre 50 et 100°C pour accélérer cette étape.

Il serait également possible d'obtenir une solution de silicate d'alcalino-terreux par dissolution de particules de silicates d'alcalino-terreux en isolant la suspension de latex et la suspension de silicate d'alcalinoterrreux par une membrane de dialyse permettant l'échange des composés ioniques.

Les quantités de silicate d'alcalin ou de silicate d'alcalino-terreux souble dans l'eau et d'hydroxyde d'alcalino-terreux mises en contact avec le latex sont calculées de telle sorte que l'on obtienne un revêtement des particules de latex présentant une épaisseur d'au plus 50 nm.

Comme indiqué précédemment la phase minérale est ajoutée dans une proportion comprise entre 0,1% et 75% en poids de phase minérale par rapport au poids du latex sec. De préférence la phase minérale est ajoutée dans une proportion comprise entre 1 % et 25% en poids de charge minérale par rapport au poids du latex sec.

L'introduction du silicate d'alcalin ou de silicate d'alcalino-terreux souble dans l'eau et d'hydroxyde d'alcalino-terreux dans la suspension comprenant le latex est telle que l'on contrôle la sursaturation en sels, du milieu de telle sorte que l'on évite la formation de particules de silicate d'alcalino-terreux en "hors grain". Ceci est effectué en contrôlant notamment le débit d'introduction de ces réactifs, ce que l'homme du métier est en mesure de faire en effectuant de simples essais de routine.

La température de précipitation est de préférence elle aussi contrôlée. Elle est plus particulièrement comprise entre 20 et 120°C, de préférence entre 20 et 90 °C.

L'opération de précipitation a lieu plus particulièrement sous agitation.

De plus, le procédé de préparation de suspensions de particules composites est mis en oeuvre à la pression atmosphérique, bien que des pressions supérieures ou inférieures ne soient pas exclues. Il est également possible de prévoir un bullage d'azote pour éviter un phénomène de carbonation du ou des hydroxydes d'alcalino-terreux.

Comme indiqué précédemment, selon une seconde variante de la présente invention, lesdites particules composites comprennent au moins deux couches, à base de silicates d'alcalinoterreux hydratés insolubles dans l'eau, les deux couches superposées, recouvrant au moins partiellement le polymère organique, et se recouvrant elles-mêmes au moins partiellement.

Dans ce cas, les particules composites obtenues par mise en oeuvre du procédé de préparation qui vient d'être décrit ci-dessus, peuvent à nouveau être traitées en surface selon ce même procédé, de manière à obtenir une couche déposée sur la première. Par conséquent, cela consiste à mettre en oeuvre, de manière successive, plusieurs fois le procédé de préparation des particules composites de latex, pour obtenir à chaque fois une couche supplémentaire; ces opérations étant répétées autant de fois que l'on souhaite déposer de couches.

Selon une variante intéressante de la présente invention, le coeur à base de polymère organique est recouvert d'une couche intermédiaire à base essentiellement d'un oxyde ou d'un hydroxyde d'alcalino-terreux tel que Ca(OH)₂ et d'une couche supérieure comprenant au moins un silicate d'alcalino-terreux hydraté insoluble dans l'eau.

Ceci revient à effectuer l'étape 1 du procédé en utilisant un hydroxyde d'alcalinoterreux, puis à réaliser une deuxième fois le procédé en effectuant les étapes 1 et 2 de façon simultanée.

Il est à noter que cette variante est particulièrement appropriée pour favoriser l'obtention d'un revêtement homogène autour du latex.

Les quantités d'hydroxydes d'alcalino-terreux, d'hydroxydes d'alcalin et de silicates d'alcalino-terreux solubles dans l'eau sont déterminées aisément par l'homme du métier en fonction de l'épaisseur de la (ou des) couche(s) souhaitée(s).

Afin de conserver la stabilité du latex et d'éviter sa floculation au cours du procédé de préparation des particules composites, et ce, pour toutes les variantes de synthèse explicitées, on peut ajouter un stabilisant au latex avant la première mise en contact avec les solutions d'hydroxydes d'alcalin et de silicate d'alcalins ou de silicates d'alcalino-terreux. On peut choisir, à titre indicatif, comme stabilisant un alkylphénol polyéthoxylé, un polyéthylène glycol, une polyvinylpyrrolidone, de l'acide citrique ou un alcool gras ethoxylé.

On ajoute généralement 1 à 50 g de stabilisant par kg de latex de polymère organique, et préférentiellement moins de 20 g/kg.

Dans le cas où un stabilisant est ajouté au mélange réactionnel afin de stabiliser ledit latex, il peut être nécessaire d'ajouter simultanément un anti-mousse pour éviter la présence trop importante de bulles.

A l'issue de cette première étape, on obtient une suspension de particules composites. Plus particulièrement, ces suspensions sont des dispersions colloïdales, c'est-à-dire de fines particules de dimensions colloïdales de polymère organique recouvertes d'au moins une couche de phase minérale comprenant des silicates d'alcalino-terreux hydratés insolubles dans l'eau tels que des silicates de calcium hydratés insolubles dans l'eau ou des silicates de magnésium hydratés insolubles dans l'eau ou leurs phases mixtes.

On notera que l'hydroxyde d'alcalin et le silicate d'alcalin ou le silicate d'alcalinoterreux hydraté peuvent se trouver soit totalement dans les colloïdes, soit simultanément sous forme d'ions et dans les colloïdes, sans toutefois que la proportion représentée par la forme ionique n'excède 10% environ du total du silicate d'alcalin ou du silicate d'alcalino-terreux hydraté dans la dispersion colloïdale.

Dans l'invention, on met de préférence en oeuvre des dispersions colloïdales dans lesquelles le silicate d'alcalino-terreux hydraté est totalement dans les colloïdes.

Les particules composites en suspension ainsi obtenues sont ensuite séchées. Le séchage peut avoir lieu directement sur la suspension obtenue. C'est le mode de séchage préféré.

Il peut être aussi possible d'effectuer le séchage sur une suspension qui a été séparée du milieu réactionnel. La séparation des particules du dit milieu peut avoir lieu selon les méthodes classiques, telle que la centrifugation par exemple.

Afin d'obtenir une poudre redispersable de latex , il est préférable d'ajouter à la suspension de particules composites de latex encapsulé un système de redispersion avant le séchage. Ce système de redispersion peut être par exemple de l'alcool polyvinylique, de la N-vinylpyrrolidone, des condensats formaldéhyde/acide naphtalènesulfonique, des condensats formaldéhyde/acide phénylsulfonique, ou des homopolymères d'acide 2-acrylamido-2-methylpropanesulfonique.

Ce système de redispersion peut être introduit dans des quantités comprises entre 5 à 30% en poids de système de redispersion par rapport au poids du latex sec.

L'eau de la suspension de particules composites de latex est ensuite éliminée et le produit obtenu pulvérisé pour obtenir une poudre. Les étapes d'élimination de l'eau de l'émulsion de latex et d'obtention d'une poudre peuvent être séparées ou concomitantes. Ainsi, on peut utiliser un procédé de congélation, suivie d'une étape de sublimation, ou de lyophilisation, de séchage ou de séchage par atomisation (pulvérisation - séchage).

Le séchage par atomisation est le procédé préféré car il permet d'obtenir directement la poudre à la granulométrie désirée sans passer nécessairement par l'étape de broyage. La granulométrie de la poudre est généralement inférieure à 500 µm, de préférence comprise entre 50 µm et 150 µm.

Le séchage par atomisation peut s'effectuer de manière habituelle dans tout appareil connu tel que par exemple une tour d'atomisation associant une pulvérisation réalisée par une buse ou une turbine avec un courant de gaz chaud. La température d'entrée du gaz chaud (en général de l'air), en tête de colonne, est de préférence comprise entre 70 et 120°C et la température de sortie est de préférence comprise entre 50 et 70°C.

Un système anti-mottant peut être ajouté à la dispersion aqueuse de polymère encapsulé. Tout ou partie du système anti-mottant peut également être introduit lors de l'étape de pulvérisation dans le procédé de séchage par atomisation. Il est possible enfin d'ajouter le système anti-mottant directement à la composition pulvérulente finale, par exemple dans un mélangeur rotatif.

Comme système anti-mottant il est possible d'utiliser une charge choisie notamment parmi la silice, le carbonate de calcium, le kaolin, le sulfate de baryum, l'oxyde de titane, le talc, l'alumine hydratée, la bentonite et le sullfoaluminate de calcium (blanc satin).

La quantité de système anti-mottant peut être comprise entre 0,5% et 60%, de préférence comprise entre 15% et 20% en poids de système anti-mottant par rapport au poids de latex sec.

La présence de ce système anti-mottant favorise la préparation de la poudre et sa stabilité au stockage en évitant l'agrégation de la poudre, c'est-à-dire son mottage.

Les compositions pulvérulentes obtenues sont stables au stockage ; elles peuvent être aisément redispersées dans l'eau sous forme de suspensions colloïdales (pseudo-latex) et utilisées directement sous forme de poudre ou sous forme de suspensions colloïdales (pseudo-latex) dans tous les domaines d'application connus des latex. Elles présentent également une excellente fluidité.

La présente invention a également pour objet l'utilisation des particules composites de latex encapsulées dans une composition de liant minéral.

Par liant minéral on entend les liants aériens ou les liants hydrauliques.

Parmi les liants aériens on peut citer les plâtres.

Parmi les liants hydrauliques on peut citer les ciments qui peuvent être de type Portland, alumineux ou de hauts fourneaux, les cendres volantes, les schistes calcinés ou les pouzzolanes.

De préférence les liants hydrauliques sont des ciments.

La présente invention a également pour objet une composition de liant minéral comprenant des particules composites de latex encapsulées.

Les particules composites de latex encapsulées peuvent être introduites dans le liant minéral sous forme de dispersion aqueuse au moment du gachâge.

De préférence les particules composites de latex encapsulées sont introduites dans le liant minéral sous forme de poudre redispersable à une composition de liant minéral sous forme de poudre solide. Ceci permet d'obtenir une composition de liant minéral prête à l'emploi.

La quantité de particules composites de latex encapsulées introduites dans le liant minéral est comprise en général entre 0,5% à 30% en poids de latex encapsulé sec par rapport au poids total du mélange.

De préférence, la quantité de particules composites de latex encapsulées introduites dans le liant minéral est comprise entre 1% à 10% en poids de latex encapsulé sec par rapport au poids total du mélange.

La présente invention a également pour objet l'utilisation d'une composition de liant minéral comprenant des particules composites de latex encapsulées dans l'industrie du bâtiment, du génie civil ou du pétrole.

## Revendications

1. Particules composites constituées d'un coeur comprenant au moins un polymère organique au moins en partie recouvert par une ou plusieurs couches de phase minérale comprenant au moins un silicate d'alcalino-terreux hydraté insoluble dans l'eau de formule (I)
CaO, aSiO₂, bMgO, cH₂O, dX (I)
dans laquelle X représente un alcalin choisi parmi Li, Na, K, Rb, Cs ou leur mélange, avec
0,5 ≤ a ≤ 10
0 ≤ b < 1
1 ≤ c/a ≤ 5
0 ≤ d/a ≤ 1
tel qu'un silicate de calcium hydraté insoluble dans l'eau ou un silicate de magnésium hydraté insoluble dans l'eau ou une de leurs phases mixtes.

2. Particules selon la revendication 1, **caractérisées en ce que** les particules composites comprennent au moins deux couches de phase minérale comprenant au moins un silicate d'alcalino-terreux hydraté insoluble dans l'eau tel qu'un silicate de calcium hydraté insoluble dans l'eau ou un silicate de magnésium hydraté insoluble dans l'eau ou une de leurs phases mixtes de nature et/ou de stoechiométrie différente(s).

3. Particules composites selon l'une des revendications précédentes, **caractérisées en ce que** le coeur à base de polymère organique est recouvert d'une couche intermédiaire à base essentiellement d'un oxyde ou d'un hydroxyde d'alcalino-terreux tel que Ca(OH)₂.

4. Particules composites selon l'une des revendications précédentes, **caractérisées en ce que** le polymère organique est choisi parmi les (co)polymères issus de la polymérisation des monomères suivants :
- les esters vinyliques et plus particulièrement l'acétate de vinyle ;
- les acrylates et méthacrylates d'alkyle dont le groupe alkyle contient de 1 à 10 atomes de carbone par exemple les acrylates et méthacrylates de méthyle, éthyle, n-butyle, 2-éthylhexyle ;
- les monomères vinylaromatiques en particulier le styrène,
ces monomères pouvant être copolymérisés entre eux ou avec d'autres monomères à insaturation éthylénique, pour former des homopolymères, des copolymères ou des terpolymères.

5. Particules composites selon la revendication 4, **caractérisées en ce que** les monomères copolymérisables avec l'acétate de vinyle et/ou les esters acryliques et/ou le styrène, sont choisis parmi l'éthylène et les oléfines comme l'isobutène ou les alpha-oléfines ayant de 6 à 20 atomes de carbone et de préférence de 8 à 14 atomes de carbone; les esters vinyliques d'acides monocarboxyliques saturés, ramifiés ou non, ayant de 1 à 16 atomes de carbone, comme le propionate de vinyle, le "Versatate" de vinyle et en particulier pour le néodécanoate de vinyle appelé VeoVa 10, le pivalate de vinyle, le 2 ethylhexylhexanoate de vinyle, ou le laurate de vinyle ; les esters d'acides insaturés mono- ou di-carboxyliques possédant 3 à 6 atomes de carbone avec les alcanols possédant 1 à 10 atomes de carbone, comme les maléates, fumarates de méthyle, d'éthyle, de butyle, d'éthylhexyle ; les monomères vinylaromatiques tels que les méthylstyrènes, les vinyltoluènes ; les halogénures de vinyle tels que le chlorure de vinyle, le chlorure de vinylidène, les diolefines particulièrement le butadiène ; les esters (méth)allyliques de l'acide (meth)acrylique, les esters (méth)allyliques des mono et diesters des acides maléique, fumarique, crotonique et itaconique, ainsi que les dérivés alkèniques des amides des acides acryliques et méthacryliques, tels que le N-méthallylmaléimide.

6. Particules composites selon la revendication 5, **caractérisées en ce qu'**on ajoute au(x) monomère(s) copolymérisable(s) avec l'acétate de vinyle et/ou les esters acryliques et/ou le styrène au moins un autre monomère choisi dans la liste suivante :
- l'acrylamide, les acides ou diacides carboxyliques à insaturation éthylénique, de préférence l'acide acrylique ou l'acide méthacrylique, les acides sulfoniques à insaturation éthylénique et des sels de ceux-ci, de préférence l'acide vinylsulfonique ou l'acide 2-acrylamido-2-méthylpropanesulfonique (AMPS), ou le méthallylsulfonate de sodium ;
- des monomères réticulants porteurs d'au moins deux insaturations éthyléniques tels que le diallylphtalate ou le diméthylméthacrylated'éthylène glycol ;
- des monomères avec des fonctions silanes tels que le vinyltrimethoxy silane ou le vinyltriethoxy silane.

7. Particules composites selon l'une des revendications précédentes, **caractérisées en ce que** la température de transition vitreuse du polymère organique est comprise entre -20°C et +50°C et de manière préférentielle entre -20°C et+20°C.

8. Particules selon l'une des revendications précédentes, **caractérisées en ce que** les particules composites présentent un diamètre moyen d'au plus 15 µm, et de préférence compris entre 0,15 et 5 µm.

9. Particules selon l'une des revendications précédentes, **caractérisées en ce que** l'épaisseur totale du revêtement, comprenant une ou plusieurs couches à base de phase minérale comprenant des silicates d'alcalino-terreux hydratés insolubles dans l'eau de nature et/ou stoechiométries différentes, est d'au plus 50 nm.

10. Particules selon l'une des revendications précédentes, **caractérisées en ce que** la masse de phase minérale déposée est comprise entre 0,1% et 75% et de préférence entre 1 % et 25% en poids de phase minérale par rapport au poids du latex sec.

11. Procédé de préparation de suspension de particules composites selon l'une des revendications précédentes, **caractérisé en ce que** l'on effectue les étapes suivantes :
1) on met en contact, en suspension, au moins un polymère organique insoluble dans l'eau (latex) avec au moins un hydroxyde d'alcalino-terreux ou au moins un halogénure d'alcalino-terreux tel qu'un chlorure, bromure, fluorure ou iodure d'alcalino-terreux ;
on ajoute à la suspension obtenue à l'étape 1 au moins un silicate d'alcalin soluble dans l'eau ou au moins un silicate d'alcalino-terreux soluble dans l'eau ; par silicate d'alcalino-terreux soluble dans l'eau, un silicate d'alcalino-terreux de formule (I)
CaO, aSiO₂, bMgO, cH₂O, dX (I)
dans laquelle X représente un alcalin choisi parmi Li, Na, K, Rb, Cs ou leur mélange, avec
0,5 ≤ a ≤ 10
0 ≤ b < 1
1 ≤ c/a ≤ 5
0 ≤ d/a ≤ 1
2) on entend un silicate d'alcalino-terreux de formule (I) telle que définie précédemment dans laquelle le taux de calcium et de silice sont choisis de telle façon que le silicate d'alcalino-terreux obtenu soit soluble dans l'eau peut se référer à la figure 1
l'étape 2 étant réalisée après l'étape 1 ou éventuellement en même temps que l'étape 1 dans le cas où on utilise à l'étape 1 un ou plusieurs hydroxydes d'alcalino-terreux.

12. Procédé selon la revendication 11, **caractérisé en ce que** le silicate d'alcalin est un silicate de sodium ou un silicate de potassium.

13. Procédé selon l'une des revendications 11 à 12, **caractérisé en ce que** l'on effectue la mise en contact dans des conditions telles que l'on évite la sursaturation en sels, du milieu.

14. Procédé de préparation de particules composites selon la revendication 2, **caractérisé en ce que** l'on met en oeuvre, autant de fois qu'il y a de couches, le procédé selon l'une des revendications 11 à 13.

15. Procédé selon l'une des revendications 11 à 14, **caractérisé en ce que** l'on ajoute un stabilisant au latex avant la première mise en contact du latex avec les solutions d'hydroxydes d'alcalin et de silicate d'alcalins ou de silicates d'alcalinoterreux.

16. Procédé selon la revendication 17, **caractérisé en ce que** l'on ajoute 1 à 50 g de stabilisant par kg de latex, et plus préférentiellement moins de 20 g de stabilisant par kg de latex.

17. Utilisation des particules composites selon l'une des revendications 1 à 10, ou susceptibles d'être obtenues selon l'une des revendications 11 à 16, dans une composition de liant minéral.

18. Composition de liant minéral comprenant des particules composites selon l'une des revendications 1 à 10.

19. Composition selon la revendication 18, **caractérisée en ce que** la quantité de particules composites de latex encapsulées introduites dans le liant minéral est comprise entre 0,5% à 30% en poids de latex encapsulé sec par rapport au poids total du mélange.

20. Composition selon la revendication 19, **caractérisée en ce que** la quantité de particules composites de latex encapsulées introduites dans le liant minéral est comprise entre 1 % à 10% en poids de latex encapsulé sec par rapport au poids total du mélange.

21. Composition selon l'une des revendications 18 à 20, **caractérisée en ce que** le liant minéral est un liant minéral hydraulique choisi parmi les ciments, en particulier de type Portland, alumineux ou de hauts fourneaux, les cendres volantes, les schistes calcinés ou les pouzzolanes.

22. Composition selon l'une des revendications 18 à 20, **caractérisée en ce que** le liant minéral est un liant minéral aérien choisi parmi les plâtres.

23. Utilisation d'une composition de liant minéral selon l'une des revendications 18 à 22 dans l'industrie de bâtiment, du génie civil ou du pétrole.

## Claims

1. Particles composite made of a heart including at least an organic polymer at least partly covered by one or more layers with mineral phase including at least a silicate of alcalino-earth hydrated insoluble in water of formula (I)
CaO, aSiO₂, bMgO, cH₂O, dX (I)
In which X is an alkaline selected from Li, Na, K, Rb, Cs or a mixture thereof
0.5 ≤ a ≤ 10
0 ≤ b < 1
1 ≤ c/a ≤ 5
0 ≤ d/a ≤ 1
such as a calcium silicate hydrated insoluble in water or a silicate of magnesium hydrated insoluble in water or one their mixed phases.

2. Particles according to claim 1, **characterized in that** the composite particles include at least two layers of mineral phase including at least a silicate of alkaline-earth hydrated insoluble in water such as a calcium silicate hydrated insoluble in water or a silicate of magnesium hydrated insoluble in water or one their mixed phases of nature and/or different stoichiometries.

3. Particles composite according to any of the preceding claims, **characterized in that** the heart based on an organic polymer is covered with an intermediate layer essentially based on an oxide or a hydroxide of alcalino-earth such as Ca(OH)₂.

4. Particles composite according to any of the preceding claims, **characterized in that** the organic polymer is selected among (co)polymers resulting from the polymerization of the following monomers:
- vinyl esters and more particularly the vinyl acetate;
- alkyl acrylates and methacrylates with the alkyl group contains from 1 to 10 carbon atoms for example methyl acrylates and methacrylates, ethyl, n-butyl, 2-ethylhexyl;
- vinylaromatic monomers in particular styrene,
these monomers being able to be copolymerized between them or with other monomers with ethylenic unsaturated, to form homopolymers, copolymers or terpolymères.

5. Particles composite according to claim 4, **characterized in that** the copolymerizable monomers with vinyl acetate and/or acrylic esters and/or styrene, are selected among ethylene and olefins like isobutylene or alpha-olefins having from 6 to 20 carbon atoms and preferably from 8 to 14 carbon atoms; vinyl esters of monocarboxylic saturated acids, ramified or not, having from 1 to 16 carbon atoms, like the vinyl propionate, the vinyl "Versatate" and in particular for vinyl neodecanoate called VeoVa 10, vinyl pivalate, 2 vinyl ethylhexylhexanoate, or vinyl laurate; esters of mono unsaturated acids or di-carboxylic having 3 to 6 carbon atoms with the alcanols having 1 to 10 carbon atoms, like the maleates, fumarates of methyl, ethyl, butyl, ethylhexyl; monomers vinylaromatic such as methylstyrenes, vinyltoluenes; vinyl halides such as vinyl chloride, vinylidene chloride, the diolefins particularly butadiene; the esters (meth) allyllic of (meth) acrylic acid, the esters (meth) allyl of mono and diesters of the maleic, fumaric, crotonic and itaconic acids, as well as the derivatives alkenic of amides of the acrylic and methacrylic acids, such as N-methallylmaleimide.

6. Particles composite according to claim 5, **characterized in that** one adds to the copolymerizable monomer(s) with vinyl acetate and/or acrylic esters and/or styrene at least another monomer chosen in the following list:
- acrylamide, the acids or carboxylic diacids with ethylenic unsaturation, preferably acrylic acid or methacrylic acid, the sulphonic acids with ethylenic unsaturation and of salts of those, preferably vinylsulfonic acid or 2-acrylamido-2-methylpropanesulfonic acid (AMPS), or sodium ethallylsulfonate ; curable monomers carrying at least two ethylenic unsaturations such as diallylphtalate or dimethylmethacrylate of ethylene glycol;
- monomers with silanes functions such as the vinyltrimethoxy silane or the vinyltriethoxy silane.

7. Particles composite according to any of the preceding claims, **characterized in that** the glass transition temperature of the organic polymer lies between -20°C and +50°C and preferably between-20°C et +20°C.

8. Particles according to any of the preceding claims, **characterized in that** the composite particles present an average diameter of at more the 15 µm, and preferably ranging between 0.15 and 5µm.

9. Particles according to any of the preceding claims, **characterized in that** the total thickness of the coating, including one or more layers containing mineral phase including hydrated alcalino-earth silicates insoluble ones in the water of nature and/or different stoichiometries, is of more than 50 nm

10. Particles according to any of the preceding claims, **characterized in that** the mass of mineral phase deposited lies between 0.1 % and 75% and preferably between 1% and 25% in weight of mineral phase compared to the weight of dry latex.

11. A process preparation of the particles composite suspension according to any of the preceding claims, **characterized in that** one carries out the following steps:
1) putting into contact, in suspension, at least an insoluble organic polymer in water (latex) with at least a hydroxide of alcalino-earth or at least a halide the alcalino-earth one such as a chloride, bromide, fluoride or iodide the alcalino-earth;
adding to the suspension of step 1 at least a silicate of alcaline soluble in water or at least a silicate of alcalino-earth soluble in water, a silicate of alcalino-earth of formula (I)
CaO, aSiO₂, bMgO, cH₂O, dX (I)
In which X is an alkaline selected from Li, Na, K, Rb, Cs or a mixture thereof
0.5 ≤ a ≤ 10
0 ≤ b < 1
1 ≤ c/a ≤ 5
0 ≤ d/a ≤ 1
2) the said alkaline-earth silicate of formula (I) such as define above in which the level of calcium and silicium are chosen in such away that the obtained alcalino-earth silicate is water soluble such as in figure 1
step 2 being realized after step 1 or possibly at the same time as step 1 in the case of using more alcalino-earth hydroxides at the step 1.

12. Process according to claim 11, **characterized in that** the silicate of alkaline is sodium silicate or potassium silicate.

13. Process according to any of claims 11 to 12, **characterized in that** one caring out the contacting under conditions such as it avoids salt sursaturation, of the medium

14. Process of preparation of particles composite according to claim 2, **characterized in that** it implements, as many once as there are layers, the process according to any of claims 11 to 13.

15. Process according to any of claims 11 to 14, **characterized in that** one adds one stabilizing agent to the latex before the first contact of latex with the solutions of alkaline hydroxides and alkaline silicate or alcalino-earth silicates.

16. Process according to claim 15, **characterized in that** one adds 1 to 50 g of stabilizing agent per kg of latex, and more preferentially less than 20 g of stabilizing agent per kg of latex.

17. The use of the particles composite according to any of claims 1 to 10 , or likely to be obtained according to one unspecified of claims 11 to 16, in a composition of mineral binder.

18. Composition of mineral binder including the particles composite according to any of claims 1 to 10.

19. Composition according to claim 18, **characterized in that** the quantity of the particles composite of latex encapsulated introduced into the mineral binder lies between 0,5% to 30% in weight of dry latex encapsulated compared to the total weight of the mixture.

20. Composition according to claim 19, **characterized in that** the quantity of the particles composite of latex encapsulated introduced into the mineral binder lies between 1% to 10% in weight of dry latex encapsulated compared to the total weight of the mixture.

21. Composition according to any of claims 18 to 20, **characterized in that** the mineral binder is a flexible selected hydraulic mineral among cements which can be of Portland type, aluminous or of blast furnaces, the fly-ashes, the calcined schists or pozzolanes.

22. Composition according to any of claims 18 to 20, **characterized in that** the mineral binder is a selected from a aerobic mineral binder among the plasters.

23. Use of a composition of mineral binder according to any of claims 18 to 22 in the building, civil engineering or oil industry.

## Patentansprüche

1. Kompositpartikel aus einem Kern, der mindestens ein organisches Polymer umfasst und zumindest teilweise mit einer oder mehreren Schichten aus einer Mineralphase überzogen ist, die mindestens ein wasserunlösliches Erdalkalisilikat-Hydrat der Formel (I) umfasst:
CaO, aSiO₂, bMgO, cH₂O, dX (I),
worin X ein Alkalimetall darstellt, ausgewählt aus Li, Na, K, Rb, Cs oder aus deren Mischung, und worin gilt:
0,5 ≤ a ≤ 10
0 ≤ b < 1
1 ≤ c/a ≤ 5
0 ≤ d/a ≤ 1,
wie ein wasserunlösliches Calciumsilikat-Hydrat oder ein wasserunlösliches Magnesiumsilikat-Hydrat oder eines aus deren gemischten Phasen.

2. Kompositpartikel gemäß Anspruch 1, **dadurch gekennzeichnet, dass** die Kompositpartikel mindestens zwei Schichten der Mineralphase umfassen, die mindestens ein wasserunlösliches Erdalkalisilikat-Hydrat wie ein wasserunlösliches Calciumsilikat-Hydrat oder Magnesiumsilikat-Hydrat oder eines aus deren natürlichen und/oder stöchiometrisch unterschiedlichen gemischten Phasen umfasst.

3. Kompositpartikel gemäß einem der vorhergehenden Ansprüche, **dadurch gekennzeichnet, dass** der Kern auf Basis des organischen Polymeren mit einer Zwischenschicht auf Basis von im Wesentlichen einem Erdalkalioxid oder -hydroxid wie von Ca(OH)₂ überzogen ist.

4. Kompositpartikel gemäß einem der vorhergehenden Ansprüche, **dadurch gekennzeichnet, dass** das organische Polymer aus (Co)polymeren aus der Polymerisation der folgenden Monomeren ausgewählt ist:
- Vinylestern und ganz besonders aus Vinylacetat;
- Alkylacrylaten und -methacrylaten, deren Alkylgruppe 1 bis 10 Kohlenstoffatome enthält, z.B. aus Methyl-, Ethyl-, n-Butyl- und aus 2-Ethylhexylacrylaten und -methacrylaten;
- vinylaromatischen Monomeren, insbesondere aus Styrol,
wobei diese Monomeren miteinander oder mit weiteren ethylenisch ungesättigten Monomeren zur Bildung von Homopolymeren, Copolymeren oder von Terpolymeren copolymerisiert werden können.

5. Kompositpartikel gemäß Anspruch 4, **dadurch gekennzeichnet, dass** die mit Vinylacetat und/oder Acrylestern und/oder mit Styrol copolymerisierbaren Monomeren aus Ethylen und Olefinen, wie Isobuten oder α-Olefinen mit 6 bis 20 und vorzugsweise mit 8 bis 14 Kohlenstoffatomen, aus Vinylestern gesättigter, verzweigter oder nicht-verzweigter Monocarbonsäuren mit 1 bis 16 Kohlenstoffatomen, wie Vinylpropionat, Vinyl- "Versatat" und insbesondere Vinylneodecanoat, bezeichnet als VeoVa 10, Vinylpivalat, Vinyl-2-ethyl(hexyl)hexanoat oder Vinyllaurat, aus Estern ungesättigter Mono- oder Dicarbonsäuren mit 3 bis 6 Kohlenstoffatomen mit Alkanolen mit 1 bis 10 Kohlenstoffatomen, wie Methyl-, Ethyl-, Butyl- und Ethylhexylmaleaten und -fumaraten, aus vinylaromatischen Monomeren wie den Methylstyrolen und Vinyltoluolen, aus Vinylhalogeniden wie Vinyl- und Vinylidenchlorid, aus Diolefinen und insbesondere aus Butadien, aus (Meth)allylestern von (Meth)acrylsäure, (Meth)allylestern von Mono- und Diestern von Malein-, Fumar-, Croton- und Itaconsäure, sowie aus alkenischen Amidderivaten von Acryl- und Methacrylsäuren, wie aus N-Methallylmaleimid, ausgewählt sind.

6. Kompositpartikel gemäß Anspruch 5, **dadurch gekennzeichnet, dass** man zu den mit Vinylacetat und/oder Acrylestern und/oder mit Styrol copolymerisierbaren Monomer(en) mindestens ein weiteres Monomer gibt, ausgewählt aus:
- Acrylamid, ethylenisch ungesättigten Carbon- oder Dicarbonsäuren, vorzugsweise aus Acryl- oder Methacrylsäure, ethylenisch ungesättigten Sulfonsäuren und deren Salzen, vorzugsweise aus Vinylsulfonsäure oder 2-Acrylamido-2-methylpropansulfonsäüure (AMPS) oder Natriummethallylsulfonat;
- vernetzenden Monomeren mit mindestens 2 ethylenisch ungesättigten Gruppen wie aus Diallylphthalat oder Dimethylmethacryloylethylenglykol;
- Monomeren mit Silan-Funktionen wie aus Vinyltrimethoxysilan oder Vinyltriethoxysilan.

7. Kompositpartikel gemäß einem der vorhergehenden Ansprüche, **dadurch gekennzeichnet, dass** die Glasübergangstemperatur des organischen Polymeren -20 bis +50°C und bevorzugt -20 bis +20°C beträgt.

8. Partikel gemäß einem der vorhergehenden Ansprüche, **dadurch gekennzeichnet, dass** die Kompositpartikel einen mittleren Durchmesser von höchstens 15 µm und vorzugsweise von 0,15 bis 5 µm aufweisen.

9. Partikel gemäß einem der vorhergehenden Ansprüche, **dadurch gekennzeichnet, dass** die Gesamtdicke des Überzugs, der eine oder mehrere Schichten auf Basis einer Mineralphase aus wasserunlöslichen natürlichen und/oder stöchiometrisch unterschiedlichen Erdalkalisilikat-Hydraten umfasst, höchstens 50 nm beträgt.

10. Partikel gemäß einem der vorhergehenden Ansprüche, **dadurch gekennzeichnet, dass** die Masse der abgeschiedenen Mineralphase 0,1 bis 75 und bevorzugt 1 bis 25 Gew.% der auf das Gewicht des trockenen Latex bezogenen Mineralphase ausmacht.

11. Verfahren zur Herstellung einer Suspension aus Kompositpartikeln gemäß einem der vorhergehenden Ansprüche, **dadurch gekennzeichnet, dass** man die folgenden Stufen durchführt:
1) man bringt, in Suspension, mindestens ein wasserunlösliches organisches Polymer (einen Latex) in Kontakt mit mindestens einem Erdalkalihydroxid oder mindestens einem Erdalkalihalogenid wie einem Erdalkalichlorid, -bromid, -fluorid oder -jodid;
man gibt zu der in Stufe 1) erhaltenen Suspension mindestens ein wasserlösliches Alkalisilikat oder mindestens ein wasserlösliches Erdalkalisilikat;
pro wasserlösliches Erdalkalisilikat eines der Formel (I):
CaO, aSiO₂ bMgO, cH₂O dX (I),
worin X ein Alkalimetall darstellt, ausgewählt aus Li, Na, K, Rb, Cs oder deren Mischung, und worin gilt:
0,5 ≤ a ≤ 10
0 ≤ b < 1
1 ≤ c/a ≤ 5
0 ≤ d/a ≤ 1,
2) man stellt ein Erdalkalisilikat der vorstehend definierten Formel (I) bereit, worin der Calcium- und Kieselsäuregehalt so ausgewählt sind, dass das erhaltene Erdalkalisilikat wasserlöslich sei und sich die Gehaltsmengen auf die Fig. 1 beziehen,
wobei die Stufe 2) nach der Stufe 1) oder gegebenenfalls gleichzeitig mit der Stufe 1) für den Fall der Anwendung einer oder mehrerer Erdalkalihydroxide in Stufe 1) durchgeführt wird.

12. Verfahren gemäß Anspruch 11, **dadurch gekennzeichnet, dass** das Alkalisilikat ein Natrium- oder Kaliumsilikat ist.

13. Verfahren gemäß einem der Ansprüche 11 bis 12, **dadurch gekennzeichnet, dass** man den Kontakt unter Bedingungen durchführt, dass eine Übersättigung des Medium mit Salz vermieden wird.

14. Verfahren zur Herstellung von Kompositpartikeln gemäß Anspruch 2, **dadurch gekennzeichnet, dass** man das Verfahren gemäß einem der Ansprüche 11 bis 13 so oft durchführt, wie Schichten vorgesehen sind.

15. Verfahren gemäß einem der Ansprüche 11 bis 14, **dadurch gekennzeichnet, dass** man ein Stabilisiermittel zum Latex gibt, bevor man den Latex zum 1. Mal mit den Lösungen von Alkalihydroxiden und Alkalisilikat oder von Erdalkalisilikaten in Kontakt bringt.

16. Verfahren gemäß Anspruch 15, **dadurch gekennzeichnet, dass** man 1 bis 50 g Stabilisiermittel pro kg Latex und bevorzugter mindestens 20 g Stabilisiermittel pro kg Latex zugibt.

17. Verwendung der Kompositpartikel gemäß einem der Ansprüche 1 bis 10 oder erhältlich gemäß einem der Ansprüche 11 bis 16 in einer Mineral-Bindemittelzusammensetzung.

18. Mineral-Bindemittelzusammensetzung, umfassend die Kompositpartikel gemäß einem der Ansprüche 1 bis 10.

19. Zusammensetzung gemäß Anspruch 18, **dadurch gekennzeichnet, dass** die Menge der verkapselten Latex-Kompositpartikel, die in das Mineral-Bindemittel eingebracht werden, 0,5 bis 30 Gew.% verkapselten Trockenlatex ausmacht, bezogen auf das Gesamtgewicht der Mischung.

20. Zusammensetzung gemäß Anspruch 19, **dadurch gekennzeichnet, dass** die Menge der verkapselten Latex-Kompositpartikel, die in das Mineral-Bindemittel eingebracht werden, 1 bis 10 Gew.% verkapselten Trockenlatex ausmacht, bezogen auf das Gesamtgewicht der Mischung.

21. Zusammensetzung gemäß einem der Ansprüche 18 bis 20, **dadurch gekennzeichnet, dass** das Mineral-Bindemittel ein hydraulisches Mineral-Bindemittel ist, ausgewählt aus aluminösen oder Hochofen-Zementen, insbesondere vom Portland-Typ, Flugaschen, calcinierten Schiefern oder aus Puzzolanen.

22. Zusammensetzung gemäß einem der Ansprüche 18 bis 20, **dadurch gekennzeichnet, dass** das Mineral-Bindemittel ein aus Gipsen ausgewähltes aerobes Mineral-Bindemittel ist.

23. Verwendung einer Mineral-Bindemittelzusammensetzung gemäß einem der Ansprüche 18 bis 22 in der Bau-, Ingenieur- oder Erdölindustrie.
